# EUROPEAN PATENT APPLICATION

(11) **EP 1 044 901 A1**
(43) Date of publication of application: **18.10.2000**
(21) Application number: 00400972.6
(22) Date of filing: 06.04.2000
(51) Int. Cl.: B65G 13/08

(54) **Device and method for verticaly transporting articles**

(30) Priority: 16.04.1999 IT MI990794
(71) Applicant: ALCATEL, 75008 Paris (FR)
(72) Inventor: Campanelli, Ignazio, 64100 Teramo (IT); Reali, Lanfranco, 64010 Villa Lempa, Teramo (IT); Cuomo, Antonio, 81024 Maddaloni, Caserta (IT)
(74) Representative: Colombo, Stefano Paolo

(57) **Abstract**

A device and method for transporting articles, for instance box-like articles, from a first location to a second location situated at a different height is described. The device according to the invention comprises a plurality of rotatable frusto-conical rollers radially arranged along a helical path and substantially defining a corresponding helical track. Some of the rollers are rotated by rotating a vertically extending central shaft, fixed to which is at least one ring gear, they in turn rotate the other rollers. According to the present invention, the articles are transported in a smooth and continuous manner without any risk of jams. The device in question is modular and further it permits of having the delivery location staggered with respect to the loading area.

## Description

The present invention relates generally to transporting articles, in particular, but not exclusively, box-like articles. Still more in particular it concerns transporting articles from a first loading location to a second unloading location which is situated at a different height with respect to said first location.

In the field of handling and vertical transporting articles, several devices able to carry out such transportation are known. Among these are firstly the articulated platform elevators which are capable of lifting or lowering an article in rather narrow spaces should be mentioned. The drawbacks of this type of lifting/lowering apparatus are the low transportation rate, the strict interdependence between the power of the motor and the weight of the articles to be transported, the impossibility of providing for the loading (or the unloading) of the articles at a path intermediate location and, above all, the impossibility of providing for asynchronous or staggered loading and unloading areas.

In addition to the platform lifting/lowering apparatus, of course, also the belt conveyor devices are known. In these devices, the conveyor belt is inclined with respect to the horizontal plane and this, naturally, affects negatively the spaces in a manner proportional to the height difference between the loading and unloading locations (the greater the height difference between the loading and unloading locations, the greater the horizontal overall dimensions of the equipment). Lastly, also in this case it is not possible to provide for the loading (or the unloading) of the articles at an intermediate location of the path and, above all, it is not possible to provide for asynchronous or staggered loading and unloading areas.

In an attempt to solve the aforesaid problems, the same applicant of this application has invented a new and handy device for transporting box-like articles from one location to another at a different height which is disclosed in EP-0.937.664. This device provides for a helical track extending between the two locations and continuously rotated by a motor. Stop means are provided to prevent the articles from rotating together with the track so that the articles are translated along a generatrix parallel to the rotation axis and discharged out of the other end of the track at the destination location. Although the above device is extremely valid, it can be enhanced in some aspects. First, fragile casings could be damaged by friction against the track and the stop means; and, lastly, the device hardly lends itself to be modular constructed.

The main object of the present invention is therefore to provide a device for transporting articles from a first location to a second location situated at a different height that solves all the prior art problems and, in particular, that is modular in construction and not too bulky, that does not damage the transported articles and that allows the asynchronous or staggered loading/unloading. The device according to the present invention further requires a relatively low power for its operation.

The above and further objects are achieved by a device having the features set forth in the independent claim 1 and by a method having the features of the independent claim 10. Further advantageous characteristics of the device and of the method in accordance with the present invention are set forth in the respective dependent claims.

Substantially the present invention provides for the use of conical rollers disposed in such a way as to define a helical path. Suitable gears transmit the motion of a motor to some of such rollers which in turn transmit it to the conical rollers associated therewith. In this way the article loaded on the rollers at the loading station is smoothly transported to the unloading station that could also be located at an intermediate position of the conveyor travel.

The device according to the invention for vertically transporting articles from a first location to a second location situated at a different height comprises a helical track for the articles to be transported and is characterized in that it comprises a plurality of fundamentally frusto-conical rotating rollers arranged radially with respect to a vertical axis in a helical configuration so as to substantially define the helical track.

The invention will result in being clear from the following detailed description, given by way of a mere exemplifying and non limiting example, to be red with reference to the attached illustrative drawings in which the various figures show:
- Fig. 1 diagrammatically shows a possible embodiment of the device according to the present invention during the upwards transportation (lifting) of box-like articles;
- Fig. 1a is similar to Fig. 1 but with the addition of the loading roller conveyor that hides the motor;
- Fig. 2 shows a side view thereof;
- Fig. 3 shows another side view thereof; and
- Fig. 4 shows a top plan view thereof.

Naturally the same reference characters will be used through the various figures to designate the same components or functionally equivalent parts.

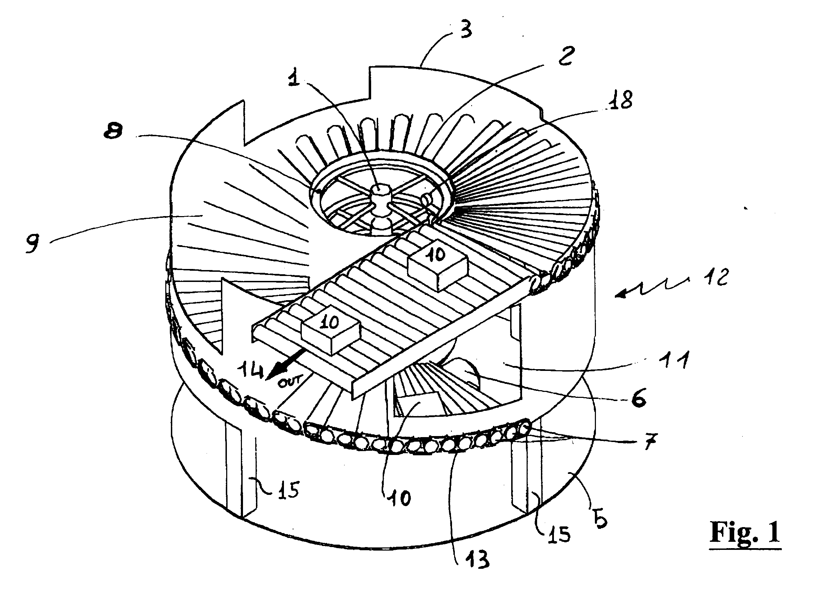

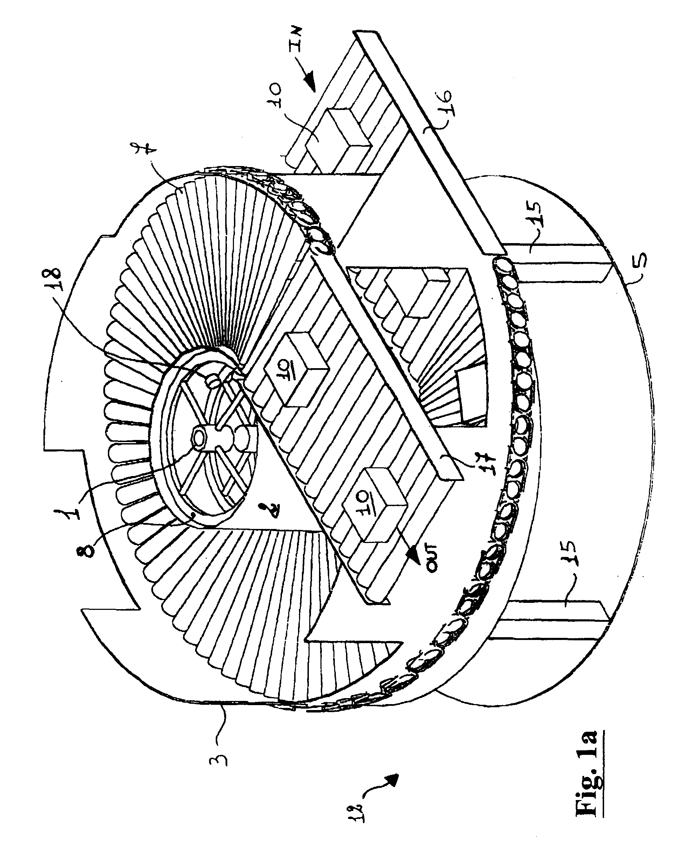

With reference first to Fig. 1, the device 12 according to the present invention comprises a base platform 5 bearing (by means of pilasters 15) an outer cylindrical casing 3 whose dimensions may be changed according to the envisaged use of the device 12. A motor 6 is fixed to said base platform 5. Therefore, besides supporting the cylindrical case, the base platform is used for mounting the motor 6 and also for protecting the latter from dust or humidity. The external cylindrical casing 3 could profitably be provided with inspection portholes or openings 19 to supervise the transportation of articles 10. Naturally, the aperture of such openings 19 can not be higher than the pitch of the helical path defined by the rollers.

The motor 6, through a suitable vertical worm reduction unit, rotates a central shaft whose axis coincides with the center line of said cylindrical casing 3. Disposed at different heights along said central shaft 1 are corresponding ring gears 8, otherwise called crown wheels, connected to the central shaft 1 by means of e.g. spokes or the like, whose function will be explained below.

The device 12 according to the present invention further comprises an inner cylinder 2, coaxial to the outer cylindrical envelope 3 and hence to the central shaft 1, whose dimension substantially corresponds to that of the crown wheels 8.

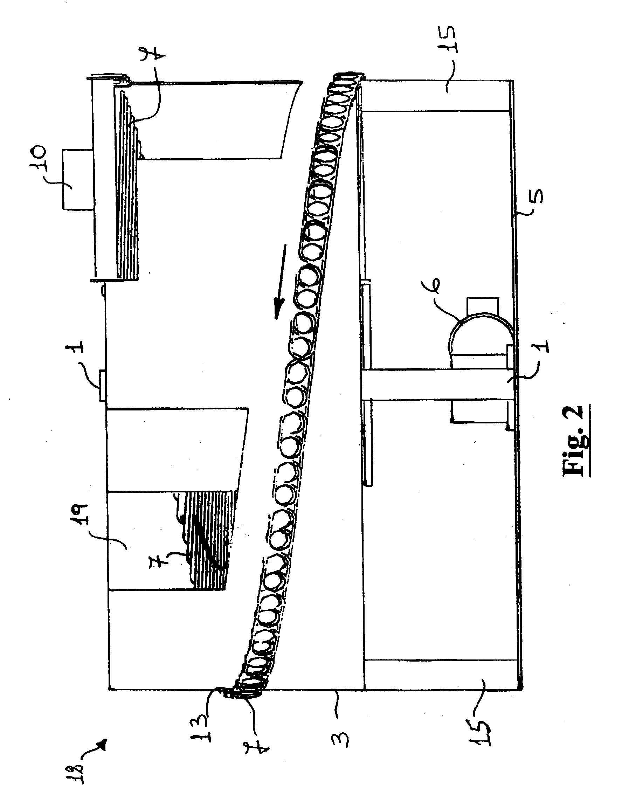

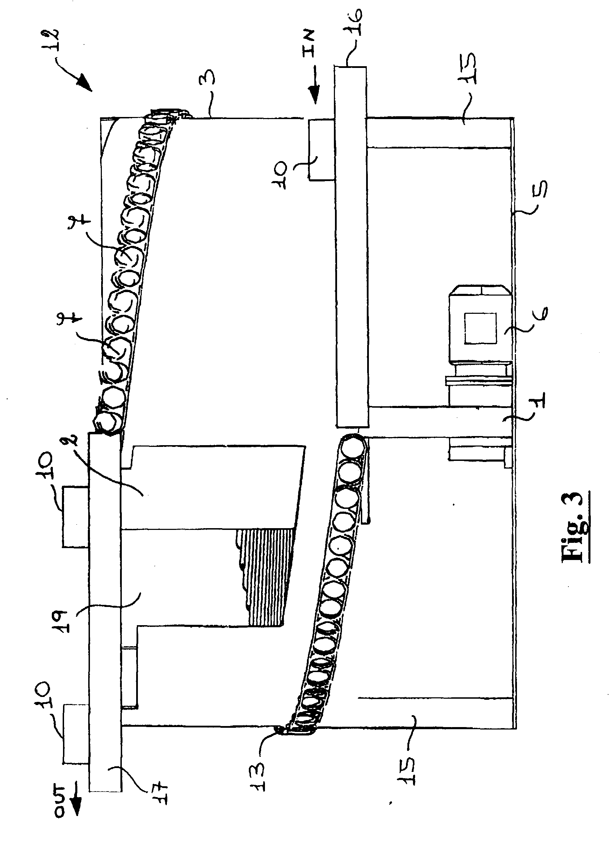

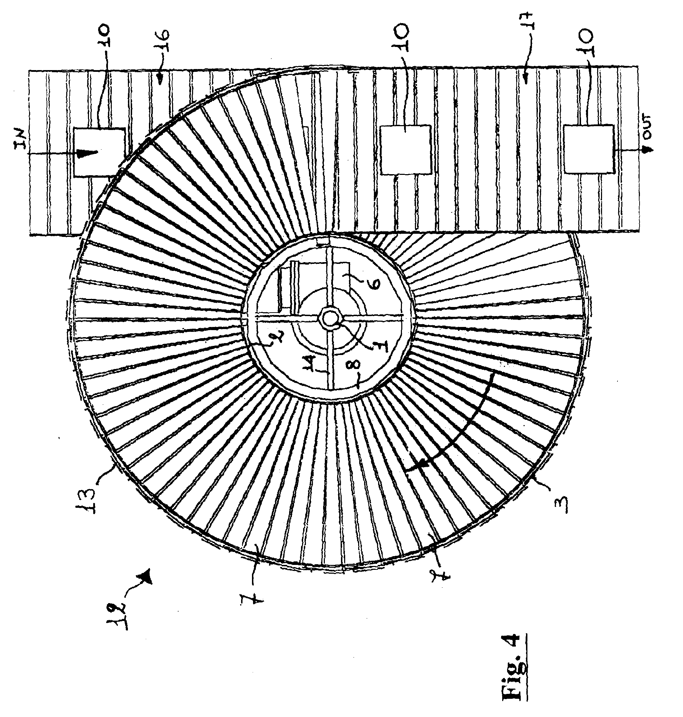

A plurality of conical rollers 7 define a screw or helical path 9 (see Figs. 2 and 3). In a top plan view (Fig. 4) thereof, the axes of the conical rollers extend radially (they converge towards the shaft 1) and each roller 7 tapers from the periphery to the center. The shafts of the rollers 7 are supported on the inner cylinder 2 and on the outer cylindrical casing 3. The conical rollers 7 are further subdivided into a variable number, preferably between six and fifteen, of groups, such as to cover a 45 degree or 90 degree: such groups of rollers define a sector.

The inner (namely, the closest to the vertical central shaft 1 ) end of the shaft of a roller of each sector of rollers comprises a gearwheel 18 for engaging the teeth of the corresponding crown wheels 8. From the opposite end through flexible dragging members 13 such as belts, chains or the like, the motion is cascade-transferred to the other rollers 7 of the sector. Each crown wheel 8 can motorize only one draft roller 7 and hence only one sector.

Each assembly comprising one roller conveyor sector, a section of outer casing 3, a section of inner cylinder 2, a section of central shaft 1 and a crown wheel 8 forms a module. The elevation and diametrical dimensions of the module are exclusively a function of the slope to be imposed (and in this connection the friction between the articles 10 to be transported and the rollers 7 must be evaluated) and of the height of the articles to be transported. By means of interface supports (not shown) it is possible to fit together and pile up a plurality of modules so as to reach the desired height and the tangent output direction of the articles. In other words, the device of the invention is able to reach different heights and/or to obtain a different orientation between the loading and unloading areas (11, 14).

The rating of the installed motor 6 may range according to the number of sectors used and preferably it ranges from about 0.37 to about 3 kW. The starting and final evolving speeds can be controlled by means of an inverter (not shown).

The feeding of the articles 10 to be transported can occur at the bottom (as shown in the various figures) or at the top of the helical track but even at an intermediate point thus increasing significantly the flexibility of the device 12 in accordance with the present invention. The unloading of the articles occurs at the top or at the bottom of the helical track but even at an intermediate point if desired. The loading and unloading operations can be carried out by all possible means, possibly by hand or through a conventional roller conveyor (16, 17).

The operation of the device in accordance with the present invention will now be apparent as follows. The motor 6, through suitable gears, rotates the vertical central shaft 1 and consequently the crown wheels 8 fixedly connected thereto. The teeth of each crown wheel engage gear 18 disposed at the end of a corresponding draft roller 7 which consequently starts to turn about its axis. Since every draft roller 7 is in turn connected by way of a belt 13, a chain or the like, with other rollers 7, these latter rollers are consequently rotated. In practice all of the rollers of the helical track are thus in revolving motion and they are capable of transporting, upwards or downwards, an article 10, for instance a parcel. The outside surface of at least some of the rollers 7, is preferably coated with a frictional surface to prevent the transported article from sliding, especially for the case of heavy articles and/or significant slopes.

Finally, although the term "conical roller" has always been used in the above description and in the appended claims, it is clear that frustum conic rollers and the like fall under this definition.

It is apparent that several modifications, adaptations, variants and replacements of parts with functionally equivalent ones may be imparted to the embodiment illustrated and described in detail above without departing from the scope defined by the following claims which are intended to be an integral part of the present description.

## Claims

1. Device (12) for vertically transporting articles (10) from a first location to a second location situated at a different height, said device comprising a helical track (9) for the articles to be transported and being characterized in that it comprises a plurality of fundamentally frusto-conical rotating rollers (7) arranged radially with respect to a vertical axis (1 ) in a helical configuration so as to substantially define the helical track (9).

2. Device (12) according to claim 1, characterized in that it comprises an outer cylindrical casing (3) and a coaxial inner cylinder (2), a first outer end of the shafts of each of said rollers (7) being supported at said outer cylindrical casing (3) and a second inner end of the shafts of each of said rollers (7) being supported at said inner cylinder (2).

3. Device (12) according to claim 2, characterized in that the inner shaft end of at least one roller (7) is provided with a gearwheel (18) for engaging a corresponding ring gear (8) coaxial with said inner cylinder (2).

4. Device (12) according to claim 3, characterized in that said at least one corresponding ring gear (8) is fixed to a central shaft (1) coaxial with said outer casing (3), which is rotated by motor means (6).

5. Device (12) according to claim 3 or 4, characterized in that said roller (7) provided with gearwheel (18) is connected to one or more further rollers (7) by way of flexible dragging means (13) such as a chain, an elastic belt or the like.

6. Device (12) according to claim 4 or 5, characterized in that said motor means (6) comprise a vertical worm reduction unit, inverter means for regulating the starting and final involving speeds and means for reversing the direction of rotation.

7. Device (12) according to claim 2, characterized in that said outer cylindrical casing (3) is provided with openings (19) for inspecting and controlling the motion of the articles (10).

8. Device (12) according to any of claims 1 to 7, characterized in that it is designated to be piled up with a similar device (12) to reach different heights and/or to obtain a different orientation between the loading and unloading areas (11, 14).

9. Device (12) according to any of claims 1 to 8, characterized in that the surface of at least part of said rollers (7) is made of high frictional coefficient material to prevent the articles (10) from sliding.

10. Method of transporting articles (10) from a first location to a second location situated at a different height, characterized in the step of advacing the articles (10) along a helical path defined by a plurality of rotating conical rollers (7) having their axes converging to a substantially vertical axis.

11. Method according to claim 10, characterized in that it comprises the step of rotating a shaft (1 ) having its axis coinciding with said vertical axis so as to rotate at least one ring gear (8) fixed to said rotating shaft (1 ) and coaxial therewith, the teeth of said at least one ring gear (8) engaging at least one corresponding gearwheel (18) provided at the inner end of the shaft of a corresponding roller of said conical rollers (7).
